(19) **Europäisches Patentamt / European Patent Office / Office européen des brevets**

(11) **EP 3 147 542 B1**

(12) **EUROPEAN PATENT SPECIFICATION**

(45) Date of publication and mention of the grant of the patent:
**12.02.2020  Bulletin 2020/07**

(51) Int Cl.:
*F16H 49/00* (2006.01)  *H02K 16/02* (2006.01)
*H02K 21/12* (2006.01)  *H02K 49/10* (2006.01)
*H02K 1/17* (2006.01)  *H02K 7/11* (2006.01)

(21) Application number: **15796595.5**

(22) Date of filing: **07.04.2015**

(86) International application number:
**PCT/JP2015/060823**

(87) International publication number:
**WO 2015/178111 (26.11.2015 Gazette 2015/47)**

(54) **MAGNETIC WAVE GEAR DEVICE**

MAGNETWELLENGETRIEBEVORRICHTUNG

DISPOSITIF D'ENGRENAGE À ONDES MAGNÉTIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **20.05.2014  JP 2014104587**

(43) Date of publication of application:
**29.03.2017  Bulletin 2017/13**

(73) Proprietors:
• **IHI Corporation**
  **Tokyo 135-8710 (JP)**
• **Osaka University**
  **Suita-shi, Osaka 565-0871 (JP)**

(72) Inventors:
• **TOJIMA Narifumi**
  **Tokyo 135-8710 (JP)**
• **ISHIMOTO Koshi**
  **Tokyo 135-8710 (JP)**
• **HANDA Norihisa**
  **Tokyo 135-8710 (JP)**
• **HIRATA Katsuhiro**
  **Suita-shi**
  **Osaka 565-0871 (JP)**

• **NIGUCHI Noboru**
  **Suita-shi**
  **Osaka 565-0871 (JP)**
• **MORIMOTO Eiki**
  **Suita-shi**
  **Osaka 565-0871 (JP)**
• **UKAJI Hajime**
  **Suita-shi**
  **Osaka 565-0871 (JP)**
• **OHNO Yuki**
  **Suita-shi**
  **Osaka 565-0871 (JP)**
• **KATOH Masayuki**
  **Suita-shi**
  **Osaka 565-0871 (JP)**

(74) Representative: **Lamb, Martin John Carstairs**
**Marks & Clerk LLP**
**15 Fetter Lane**
**London EC4A 1BW (GB)**

(56) References cited:
**EP-A1- 2 390 993      WO-A1-2013/001557**
**WO-A1-2014/128985    GB-A- 2 437 568**
**JP-A- H10 191 621      JP-A- 2009 535 012**
**JP-A- 2012 157 205**

## Description

[Technical Field]

The present invention relates to a magnetic wave gear device.
Priority is claimed on Japanese Patent Application No. 2014-104587, filed on May 20, 2014, the content of which is incorporated herein by reference.

[Background Art]

A magnetic wave gear device in which a stator, a low-speed rotor, and a high-speed rotor are provided in a concentric shape is disclosed in Patent Document 1 below. When the magnetic wave gear device is used as, for instance, a motor, a high-speed rotor is rotated by a magnetomotive force of a coil provided for a stator, and thereby a low-speed rotor that is an output shaft is rotated at a predetermined reduction ratio by a harmonic magnetic flux.
Since a predetermined reduction ratio (speed-up ratio) is obtained without contact in principle, the magnetic wave gear device is excellent in low abrasion, low noise, and durability compared to a mechanical reduction gear (speed-up gear). For this reason, for example, there have been attempts to apply the magnetic wave gear device to a direct drive of a wind power generator, a main body of which is installed at a height of tens of meters and which requires a large amount of effort for maintenance of the speed-up gear (see Patent Document 2) Moreover, the documents GB 2 437 568 A and EP 2 390 993 A1 disclose an electrical motor with magnetic wave gear comprising a stator and two rotors concentrically arranged to each other.

[Citation List]

[Patent Document]

[Patent Document 1]
Japanese Unexamined Patent Application, First Publication No. 2010-106940
[Patent Document 2]
Japanese Unexamined Patent Application, First Publication No. 2010-223340

[Summary of Invention]

[Technical Problem]

Meanwhile, in the magnetic wave gear device (e.g., a structure shown in FIG. 10 of Patent Document 2 (hereinafter sometimes referred to as double-sided PM)) of the related art, since the low-speed rotor is present in an air gap (between the stator and the high-speed rotor) as the motor, there is a problem that a length of the air gap is increased by a thickness of the low-speed rotor, and a torque constant is reduced.
The present invention has been made in view of the above problem, and it is an object of the present invention to provide a magnetic wave gear device capable of improving a torque constant.

[Solution to Problem]

To solve the problem, first to sixth aspects of the present invention are provided as defined in claims 1 to 6.

[Effects of Invention]

According to the present invention, the magnetic wave gear device capable of improving a torque constant can be obtained.

[Brief Description of Drawings]

FIG. 1 is a cross-sectional view showing a magnetic wave gear device in a first embodiment of the present invention.

FIG. 2 is a cross-sectional view showing a magnetic wave gear device in a second embodiment of the present invention.

FIG. 3 is a cross-sectional view showing a magnetic wave gear device in a third embodiment of the present invention.

FIG. 4 is a cross-sectional view showing a magnetic wave gear device in a fourth embodiment of the present invention.

FIG. 5 is a cross-sectional view showing a magnetic wave gear device in a fifth embodiment of the present invention.

FIG. 6 is a cross-sectional view showing a magnetic wave gear device in a sixth embodiment of the present invention.

FIG. 7A is a cross-sectional view showing a magnetic wave gear device as a comparative example.

FIG. 7B is a cross-sectional view showing a magnetic wave gear device as a comparative example.

FIG. 8A is a cross-sectional view showing a magnetic wave gear device as a comparative example.

FIG. 8B is a cross-sectional view showing a magnetic wave gear device as a comparative example.

FIG. 9A is a cross-sectional view showing a magnetic wave gear device as a comparative example.

FIG. 9B is a cross-sectional view showing a magnetic wave gear device as a comparative example.

FIG. 10 is a graph showing a relationship between transmission torque of the magnetic wave gear device and a rotational angle of a high-speed rotor.

FIG. 11 is a graph showing a relationship between maximum transmission torque of the magnetic wave gear device (a basic structure) and maximum transmission torque of the magnetic wave gear device (a rotor replacement structure).

FIG. 12 is a graph showing a relationship between a torque constant of the magnetic wave gear device (the basic structure) and a torque constant of the magnetic wave gear device (the rotor replacement structure).

[Description of Embodiments]

Hereinafter, embodiments of the present invention will be described with reference to the drawings. In the following description, a case in which a magnetic wave gear device of the present invention is applied to a motor (an electric motor) is given by way of example.

(First embodiment)

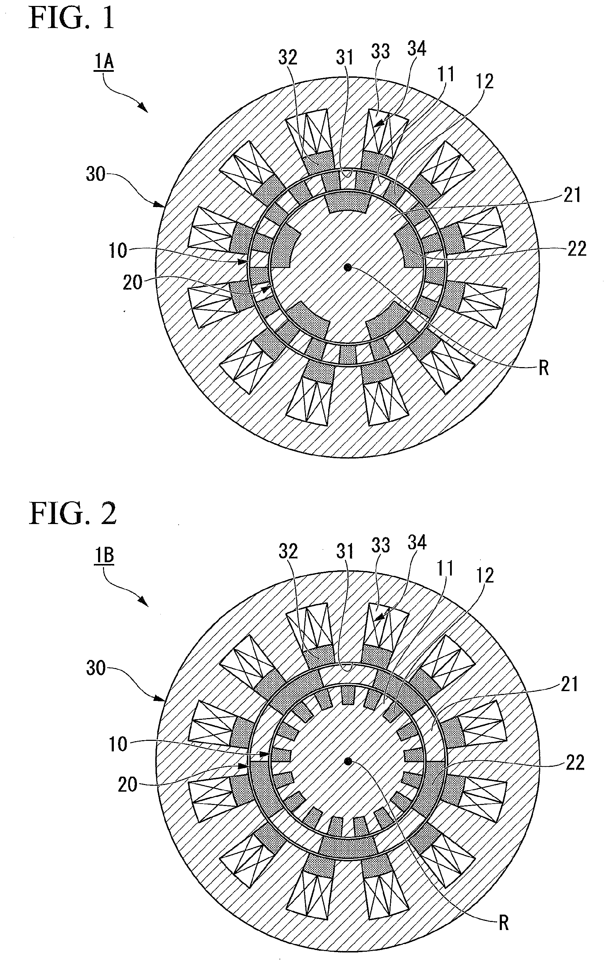

FIG. 1 is a cross-sectional view showing a magnetic wave gear device 1A in a first embodiment of the present invention.

As shown in FIG. 1, the magnetic wave gear device 1A has a low-speed rotor 10, a high-speed rotor 20, and a stator 30. The low-speed rotor 10, the high-speed rotor 20, and the stator 30 are provided in a concentric shape, a center of which is a rotational axis R.

The low-speed rotor 10 has an approximately cylindrical shape, and is disposed between the stator 30 and the high-speed rotor 20. The low-speed rotor 10 has first magnetic bodies 11 and first permanent magnets 12 alternately in a circumferential direction. The plurality of first magnetic bodies 11 are formed of, for instance, an electromagnetic steel sheet, and are arranged around the rotational axis R at regular intervals. The first permanent magnets 12 are formed of, for instance, a neodymium magnet, and are each arranged between the neighboring first magnetic bodies 11 in a circumferential direction. The first permanent magnets 12 are all magnetized outward, and magnetic poles thereof are made identical (e.g., N poles).

The high-speed rotor 20 has an approximately columnar shape, and is disposed inside the low-speed rotor 10. The high-speed rotor 20 has second magnetic bodies 21 and second permanent magnets 22 alternately in a circumferential direction. The plurality of second magnetic bodies 21 are formed of, for instance, an electromagnetic steel sheet, and are arranged around the rotational axis R at regular intervals. The second permanent magnets 22 are formed of, for instance, a neodymium magnet, and are each arranged between the neighboring second magnetic bodies 21 in a circumferential direction. Like directions of the magnetic poles of the first permanent magnets, the second permanent magnets 22 are all magnetized outward, and magnetic poles thereof are made identical (e.g., N poles).

The stator 30 has an approximately cylindrical shape, and is disposed outside the low-speed rotor 10. The stator 30 has third magnetic bodies 31 and third permanent magnets 32 alternately in a circumferential direction. The plurality of third magnetic bodies 31 are formed of, for instance, an electromagnetic steel sheet, and are arranged around the rotational axis R at regular intervals. The third permanent magnets 32 are formed of, for instance, a neodymium magnet, and are each arranged between the neighboring third magnetic bodies 31 in a circumferential direction. Like directions of the magnetic poles of the first permanent magnets, the third permanent magnets 32 are all magnetized outward, and magnetic poles thereof are made identical (e.g., N poles).

The third magnetic bodies 31 protrude inward in a radial direction, and have slots 34 in which coils 33 can be wound. The coils 33 are wound around the third magnetic bodies 31.

The coils of the present embodiment are phase-divided into, for instance, a U phase, a V phase, and a W phase.

The magnetic wave gear device 1A having the above constitution is configured to satisfy a relation expression (1) below when the number of magnetic poles of the low-speed rotor 10 is defined as Nl, the number of pole pairs of the high-speed rotor 20 is defined as Nh, and the number of slots of the stator 30 is defined as Ns.

$$Ns = Nl\pm Nh \cdots\cdots\cdots\cdots\cdots\cdots (1)$$

The number of magnetic poles of the low-speed rotor 10 (the number of first magnetic bodies 11) of the present embodiment is 17, the number of pole pairs of the high-speed rotor 20 (the number of sets of N poles and S poles, i.e., the number of sets of second magnetic bodies 21 and the second permanent magnets 22) is 5, the number of slots of the stator 30 (the number of slots 34) is 12, and the relation expression (1) is satisfied.

An operating principle of the magnetic wave gear device 1A having the above constitution is described in detail in the known document (Japanese Unexamined Patent Application, First Publication No. 2010-106940), and thus detailed description is omitted herein. However, in the magnetic wave gear device 1A according to the present embodiment, the relation expression (1) is satisfied, and thus the low-speed rotor 10 is rotated at a reduction ratio Gr represented by an expression (2) below.

$$Gr = Nl/Nh \cdots\cdots\cdots\cdots\cdots\cdots (2)$$

That is, an electric current is applied to the stator 30, and thereby the high-speed rotor 20 is rotated based on the principle of a brushless motor. Magnetic flux generated from the second permanent magnets 22 of the high-speed rotor 20 is modulated by the first magnetic bodies 11 of the low-speed rotor 10, and Nl±Nh-th order harmonic magnetic flux is generated between the low-speed rotor 10 and the stator 30. At this point, when the magnetic flux generated from the third permanent magnets 32 of the stator 30 is Nl+Nh or Nl-Nh, the low-speed rotor 10 is rotated according to the reduction ratio Gr.

In the present embodiment, since the first permanent magnets 12 are positioned between the first magnetic bodies 11 of the low-speed rotor 10, and since the low-speed rotor 10 and the stator 30 generate the same order harmonic magnetic flux as the high-speed rotor 20, a torque constant can be improved. For example, the high-speed rotor 20 generates fifth order harmonic magnetic flux, calculated by subtracting 12, the number of poles corresponding to the number of third permanent magnets 32 of the stator 30, from 17, the number of poles corresponding to the number of first magnetic bodies 11 (pole pieces) of the low-speed rotor 10.

On the other hand, the low-speed rotor 10 and the stator 30 generate fifth order harmonic magnetic flux, calculated by subtracting 12, the number of poles corresponding to the number of third permanent magnets 32, from 17, the number of poles corresponding to the number of first permanent magnets 12.

Accordingly, the low-speed rotor 10 and the stator 30 generate the same order harmonic magnetic flux as the high-speed rotor 20, and these fluxes interact with each other. Thereby, the torque constant can be improved.

That is, according to the first embodiment described above, the magnetic wave gear device 1A has a constitution in which the stator 30, the low-speed rotor 10, and the high-speed rotor 20 are provided in a concentric shape; in which the low-speed rotor 10 is disposed between the stator 30 and the high-speed rotor 20 and has the first magnetic bodies 11 and the first permanent magnets 12, the magnetic poles of which face the same direction, alternately in a circumferential direction; in which the high-speed rotor 20 has the second magnetic bodies 21 and the second permanent magnets 22, the magnetic poles of which face the same direction as the first permanent magnets 12, alternately in a circumferential direction; in which the stator 30 has the third magnetic bodies 31 provided with the slots 34 in which the coils 33 can be wound, and the third permanent magnets 32, the magnetic poles of which face the same direction as the first permanent magnets 12, alternately in a circumferential direction; and in which the relationship of Ns=Nl±Nh is satisfied when the number of magnetic poles of the low-speed rotor 10 is defined as Nl, the number of pole pairs of the high-speed rotor 20 is defined as Nh, and the number of slots of the stator 30 is defined as Ns, and thereby the torque constant can be improved. Hereinafter, this magnetic wave gear device 1A is sometimes referred to as a three layer half PM.

(Second embodiment)

Next, a second embodiment of the present invention will be described. In the following description, constituent portions that are identical or similar to those of the aforementioned embodiment are given the same signs, and a description thereof is simplified or omitted.

FIG. 2 is a cross-sectional view showing a magnetic wave gear device 1B in a second embodiment of the present invention.

As shown in FIG. 2, the magnetic wave gear device 1B has a low-speed rotor 10, a high-speed rotor 20, and a stator 30. The low-speed rotor 10, the high-speed rotor 20, and the stator 30 are provided in a concentric shape, a center of which is a rotational axis R. In this magnetic wave gear device 1B, the low-speed rotor 10 is disposed inside, and the high-speed rotor 20 is disposed outside.

The stator 30 has the same constitution as that of the first embodiment.

The low-speed rotor 10 has an approximately columnar shape, and is disposed inside the high-speed rotor 20. The low-speed rotor 10 has first magnetic bodies 11 and first permanent magnets 12 alternately in a circumferential direction. The plurality of first magnetic bodies 11 are formed of, for instance, an electromagnetic steel sheet, and are arranged around the rotational axis R at regular intervals. The first permanent magnets 12 are formed of, for instance, a neodymium magnet, and are each arranged between the neighboring first magnetic bodies 11 in a circumferential direction. The first permanent magnets 12 are all magnetized outward, and magnetic poles thereof are made identical (e.g., N poles).

The high-speed rotor 20 has an approximately cylindrical shape, and is disposed between the stator 30 and the low-speed rotor 10. The high-speed rotor 20 has second magnetic bodies 21 and second permanent magnets 22 alternately in a circumferential direction. The plurality of second magnetic bodies 21 are formed of, for instance, an electromagnetic steel sheet, and are arranged around the rotational axis R at regular intervals. The second permanent magnets 22 are formed of, for instance, a neodymium magnet, and are each arranged between the neighboring second magnetic bodies 21 in a circumferential direction. Like directions of the magnetic poles of the first permanent magnets, the second permanent magnets 22 are all magnetized outward, and magnetic poles thereof are made identical (e.g., N poles).

The number of magnetic poles of the low-speed rotor 10 (the number of first magnetic bodies 11) of the present embodiment is 17, the number of pole pairs of the high-speed rotor 20 (the number of sets of N poles and S poles, i.e., the number of sets of second magnetic bodies 21 and the second permanent magnets 22) is 5, the number of slots of the stator 30 (the number of slots 34) is 12, and the above relation expression (1) is satisfied.

In the present embodiment, since the first permanent magnets 12 are positioned between the first magnetic bodies 11 of the low-speed rotor 10, and since the low-speed rotor 10 and the stator 30 generate the same order harmonic magnetic flux as the high-speed rotor 20, a torque constant can be improved as described above.

In the present embodiment, since a length of an air gap between the stator 30 and the high-speed rotor 20 can be shortened to the same extent as in a typical motor by replacing positions of the low-speed rotor 10 and the high-speed rotor 20, the torque constant can be further improved.

That is, according to the second embodiment described above, the magnetic wave gear device 1B has a constitution in which the stator 30, the low-speed rotor 10, and the high-speed rotor 20 are provided in a concentric shape; in which the low-speed rotor 10 has the first magnetic bodies 11 and the first permanent magnets 12, the magnetic poles of which face the same direction, alternately in a circumferential direction; in which the high-speed rotor 20 is disposed between the stator 30 and the low-speed rotor 10 and has the second magnetic bodies 21 and the second permanent magnets 22, the magnetic poles of which face the same direction as the first permanent magnets 12, alternately in a circumferential direction; in which the stator 30 has the third magnetic bodies 31 provided with the slots 34 in which the coils 33 can be wound, and the third permanent magnets 32, the magnetic poles of which face the same direction as the first permanent magnets 12, alternately in a circumferential direction; and in which the relationship of Ns=Nl±Nh is satisfied when the number of magnetic poles of the low-speed rotor 10 is defined as Nl, the number of pole pairs of the high-speed rotor 20 is defined as Nh, and the number of slots of the stator 30 is defined as Ns, and thereby the torque constant can be improved. Hereinafter, this magnetic wave gear device 1B is sometimes referred to as a three layer half PM (a rotor replacement structure).

(Third embodiment)

Next, a third embodiment of the present invention will be described. In the following description, constituent portions that are identical or similar to those of the aforementioned embodiment are given the same signs, and a description thereof is simplified or omitted.

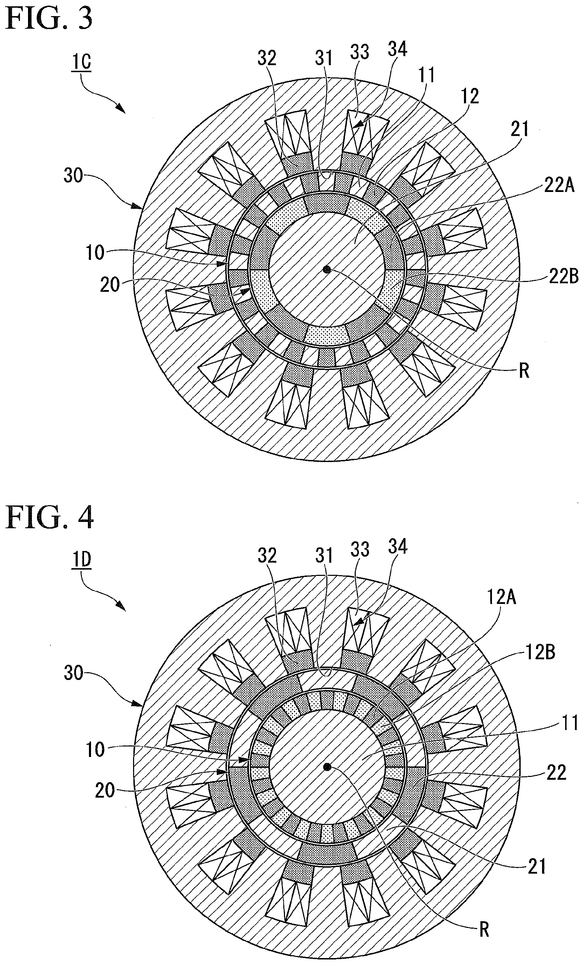

FIG. 3 is a cross-sectional view showing a magnetic wave gear device 1C in a third embodiment of the present invention.

As shown in FIG. 3, the magnetic wave gear device 1C has a low-speed rotor 10, a high-speed rotor 20, and a stator 30. The low-speed rotor 10, the high-speed rotor 20, and the stator 30 are provided in a concentric shape, a center of which is a rotational axis R. The low-speed rotor 10 and the stator 30 have the same constitution as those of the first embodiment.

The high-speed rotor 20 has an approximately columnar shape, and is disposed inside the low-speed rotor 10. The high-speed rotor 20 has second permanent magnets 22A and 22B, magnetic poles of which have different directions, alternately in a circumferential direction. The plurality of second permanent magnets 22A are provided on circumferential surfaces of the second magnetic bodies 21 at regular intervals around the rotational axis R. The second permanent magnets 22A are formed of, for instance, a neodymium magnet and are all magnetized outward, and magnetic poles thereof are made identical (e.g., N poles). On the other hand, the second permanent magnets 22B are each arranged between the neighboring second permanent magnets 22A in a circumferential direction. The second permanent magnets 22B are formed of, for instance, a neodymium magnet and are all magnetized inward, and magnetic poles thereof are made identical (e.g., S poles).

The number of magnetic poles of the low-speed rotor 10 (the number of first magnetic bodies 11) of the present embodiment is 17, the number of pole pairs of the high-speed rotor 20 (the number of sets of N poles and S poles, i.e., the number of sets of second permanent magnets 22A and 22B) is 5, the number of slots of the stator 30 (the number of slots 34) is 12, and the above relation expression (1) is satisfied.

In the present embodiment, since the first permanent magnets 12 are positioned between the first magnetic bodies 11 of the low-speed rotor 10, and since the low-speed rotor 10 and the stator 30 generate the same order harmonic magnetic flux as the high-speed rotor 20, a torque constant can be improved as described above.

That is, according to the third embodiment described above, the magnetic wave gear device 1C has a constitution in which the stator 30, the low-speed rotor 10, and the high-speed rotor 20 are provided in a concentric shape; in which the low-speed rotor 10 is disposed between the stator 30 and the high-speed rotor 20 and has the first magnetic bodies 11 and the first permanent magnets 12, the magnetic poles of which face the same direction, alternately in a circumferential direction; in which the high-speed rotor 20 has the second permanent magnets 22A and 22B, the magnetic poles of which face different directions, alternately in a circumferential direction; in which the stator 30 has third magnetic bodies 31 provided with the slots 34 in which coils 33 can be wound, and third permanent magnets 32, the magnetic poles of which face the same direction as the first permanent magnets 12, alternately in a circumferential direction; and in which the relationship of Ns=Nl±Nh is satisfied when the number of magnetic poles of the low-speed rotor 10 is defined as Nl, the number of pole pairs of the high-speed rotor 20 is defined as Nh, and the number of slots of the stator 30 is defined as Ns, and thereby the torque constant can be improved. Hereinafter, this magnetic wave gear device 1C is sometimes referred to as a three layer 2/3PM.

(Fourth embodiment)

Next, a fourth embodiment of the present invention will be described. In the following description, constituent portions that are identical or similar to those of the aforementioned embodiment are given the same signs, and a description thereof is simplified or omitted.

FIG. 4 is a cross-sectional view showing a magnetic wave gear device 1D in a third embodiment of the present invention.

As shown in FIG. 4, the magnetic wave gear device 1D has a low-speed rotor 10, a high-speed rotor 20, and a stator 30. The low-speed rotor 10, the high-speed rotor 20, and the stator 30 are provided in a concentric shape, a center of which is a rotational axis R. In this magnetic wave gear device 1D, the low-speed rotor 10 is disposed inside, and the high-speed rotor 20 is disposed outside. The stator 30 has the same constitution as that of the first embodiment. The high-speed rotor 20 has the same constitution as that of the second embodiment.

The low-speed rotor 10 has an approximately columnar shape, and is disposed inside the high-speed rotor 20. The low-speed rotor 10 has first permanent magnets 12A and 12B, magnetic poles of which face different directions, alternately in a circumferential direction. The plurality of first permanent magnets 12A are provided on circumferential surfaces of the first magnetic bodies 11 at regular intervals around the rotational axis R. The first permanent magnets 12A are formed of, for instance, a neodymium magnet and are all magnetized outward, and magnetic poles thereof are made identical (e.g., N poles). On the other hand, the first permanent magnets 12A are each arranged between the neighboring first permanent magnets 12A in a circumferential direction. The first permanent magnets 12A are formed of, for instance, a neodymium magnet and are all magnetized inward, and magnetic poles thereof are made identical (e.g., S poles).

The number of magnetic poles of the low-speed rotor 10 of the present embodiment (the number of first permanent magnets 12A or first permanent magnets 12B) is 17, the number of pole pairs of the high-speed rotor 20 (the number of sets of N poles and S poles, i.e., the number of sets of second magnetic bodies 21 and second permanent magnets 22) is 5, the number of slots of the stator 30 (the number of slots 34) is 12, and the aforementioned relation expression (1) is satisfied.

In the present embodiment, since the first permanent magnets 12B, the magnetic poles of which face different directions, are positioned between the first permanent magnets 12A of the low-speed rotor 10, and since the low-speed rotor 10 and the stator 30 generate the same order harmonic magnetic flux as the high-speed rotor 20, a torque constant can be improved as described above.

Further, in the present embodiment, since a length of an air gap between the stator 30 and the high-speed rotor 20 can be shortened to the same extent as in a typical motor by replacing positions of the low-speed rotor 10 and the high-speed rotor 20, the torque constant can be further improved.

That is, according to the fourth embodiment described above, the magnetic wave gear device 1D has a constitution in which the stator 30, the low-speed rotor 10, and the high-speed rotor 20 are provided in a concentric shape; in which the low-speed rotor 10 has the first permanent magnets 12A and 12B, the magnetic poles of which face different directions, alternately in a circumferential direction; in which the high-speed rotor 20 is disposed between the stator 30 and the low-speed rotor 10 and has the second magnetic bodies 21 and the second permanent magnets 22, the magnetic poles of which face the same direction, alternately in a circumferential direction; in which the stator 30 has third magnetic bodies 31 provided with the slots 34 in which coils 33 can be wound, and third permanent magnets 32, the magnetic poles of which face the same direction as the second permanent magnets 22, alternately in a circumferential direction; and in which the relationship of Ns=Nl±Nh is satisfied when the number of magnetic poles of the low-speed rotor 10 is defined as Nl, the number of pole pairs of the high-speed rotor 20 is defined as Nh, and the number of slots of the stator 30 is defined as Ns, and thereby the torque constant can be improved. Hereinafter, this magnetic wave gear device 1D is sometimes referred to as a three layer 2/3PM (a rotor replacement structure).

(Fifth embodiment)

Next, a fifth embodiment of the present invention will be described. In the following description, constituent portions that are identical or similar to those of the aforementioned embodiment are given the same signs, and a description thereof is simplified or omitted.

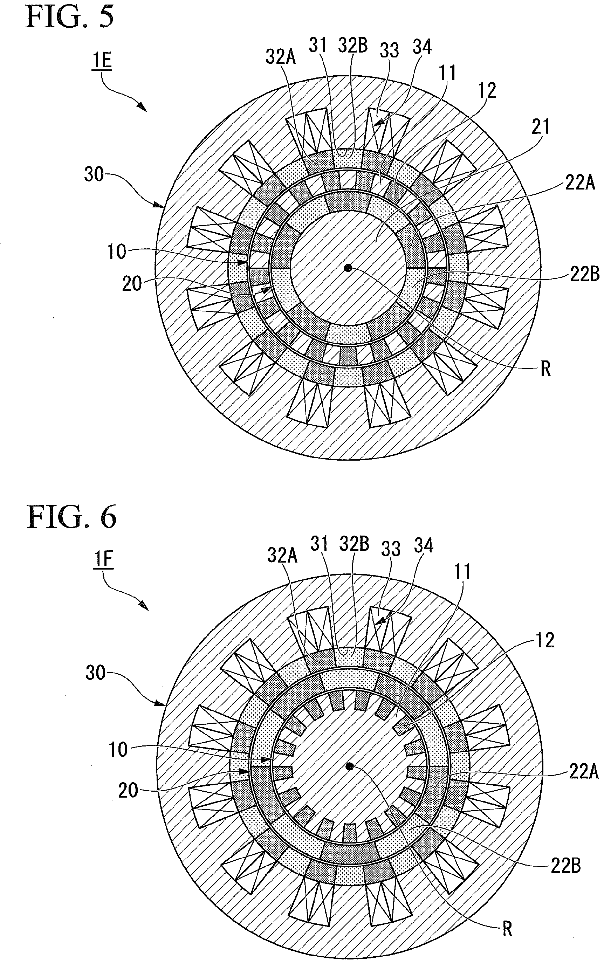

FIG. 5 is a cross-sectional view showing a magnetic wave gear device 1E in a fifth embodiment of the present invention.

As shown in FIG. 5, the magnetic wave gear device 1E has a low-speed rotor 10, a high-speed rotor 20, and a stator 30. The low-speed rotor 10, the high-speed rotor 20, and the stator 30 are provided in a concentric shape, a center of which is a rotational axis R. The low-speed rotor 10 has the same constitution as that of the first embodiment. The high-speed rotor 20 has the same constitution as that of the third embodiment.

The stator 30 has an approximately cylindrical shape, and is disposed outside the low-speed rotor 10. The stator 30 has third magnetic bodies 31 and third permanent magnets 32A and 32B. The plurality of third permanent magnets 32A and 32B are arranged in a circumferential direction such that the directions of the magnetic poles are different from each other. The third permanent magnets 32A are provided at distal ends of the third magnetic bodies 31. The third permanent magnets 32A are formed of, for instance, a neodymium magnet and are all magnetized outward, and magnetic poles thereof are made identical (e.g., N poles). On the other hand, the third permanent magnets 32B are each arranged between the neighboring third permanent magnets 32A in a circumferential direction. The third permanent magnets 32B are formed of, for instance, a neodymium magnet and are all magnetized inward, and magnetic poles thereof are made identical (e.g., S poles).

The number of magnetic poles of the low-speed rotor 10 of the present embodiment (the number of first magnetic bodies 11) is 17, the number of pole pairs of the high-speed rotor 20 (the number of sets of N poles and S poles, i.e., the number of sets of second permanent magnets 22A and 22B) is 5, the number of slots of the stator 30 (the number of slots 34) is 12, and the aforementioned relation expression (1) is satisfied.

In the present embodiment, since the first permanent magnets 12 are positioned between the first magnetic bodies 11 of the low-speed rotor 10, and since the low-speed rotor 10 and the stator 30 generate the same order harmonic magnetic flux as the high-speed rotor 20, a torque constant can be improved as described above.

That is, according to the fifth embodiment described above, the magnetic wave gear device 1E has a constitution in which the stator 30, the low-speed rotor 10, and the high-speed rotor 20 are provided in a concentric shape; in which the low-speed rotor 10 is disposed between the stator 30 and the high-speed rotor 20 and has the first magnetic bodies 11 and the first permanent magnets 12, the magnetic poles of which face the same direction, alternately in a circumferential direction; in which the high-speed rotor 20 has the second permanent magnets 22A and 22B, the magnetic poles of which face different directions, alternately in a circumferential direction; in which the stator 30 has a plurality of third magnetic bodies 31 provided with the slots 34 in which coils 33 can be wound, and a plurality of third permanent magnets 32A and 32B disposed alternately in a circumferential direction such that directions of the magnetic poles are different from each other; and in which the relationship of Ns=Nl±Nh is satisfied when the number of magnetic poles of the low-speed rotor 10 is defined as Nl, the number of pole pairs of the high-speed rotor 20 is defined as Nh, and the number of slots of the stator 30 is defined as Ns, and thereby the torque constant can be improved. Hereinafter, this magnetic wave gear device 1E is sometimes referred to as a combined PM.

(Sixth embodiment)

Next, a sixth embodiment of the present invention will be described. In the following description, constituent portions that are identical or similar to those of the aforementioned embodiment are given the same signs, and a description thereof is simplified or omitted.

FIG. 6 is a cross-sectional view showing a magnetic wave gear device 1F in a sixth embodiment of the present invention.

As shown in FIG. 6, the magnetic wave gear device 1F has a low-speed rotor 10, a high-speed rotor 20, and a stator 30. The low-speed rotor 10, the high-speed rotor 20, and the stator 30 are provided in a concentric shape, a center of which is a rotational axis R. In this magnetic wave gear device 1F, the low-speed rotor 10 is disposed inside, and the high-speed rotor 20 is disposed outside. The low-speed rotor 10 has the same constitution as that of the second embodiment. The stator 30 has the same constitution as that of the fifth embodiment.

The high-speed rotor 20 has an approximately cylindrical shape, and is disposed between the stator 30 and the low-speed rotor 10. The high-speed rotor 20 has second permanent magnets 22A and 22B, the magnetic poles of which face different directions, alternately in a circumferential direction. The plurality of second permanent magnets 22A are arranged around the rotational axis R at regular intervals. The second permanent magnets 22A are formed of, for instance, a neodymium magnet and are all magnetized outward, and magnetic poles thereof are made identical (e.g., N poles). On the other hand, the second permanent magnets 22B are each arranged between the neighboring second permanent magnets 22A in a circumferential direction. The second permanent magnets 22B are formed of, for instance, a neodymium magnet and are all magnetized inward, and magnetic poles thereof are made identical (e.g., S poles).

The number of magnetic poles of the low-speed rotor 10 of the present embodiment (the number of first magnetic bodies 11) is 17, the number of pole pairs of the high-speed rotor 20 (the number of sets of N poles and S poles, i.e., the number of sets of second permanent magnets 22A and 22B) is 5, the number of slots of the stator 30 (the number of slots 34) is 12, and the aforementioned relation expression (1) is satisfied.

In the present embodiment, since the first permanent magnets 12 are positioned between the first magnetic bodies 11 of the low-speed rotor 10, and since the low-speed rotor 10 and the stator 30 generate the same order harmonic magnetic flux as the high-speed rotor 20, a torque constant can be improved as described above.

Further, in the present embodiment, since a length of an air gap between the stator 30 and the high-speed rotor 20 can be shortened to the same extent as in a typical motor by replacing positions of the low-speed rotor 10 and the high-speed rotor 20, the torque constant can be further improved.

That is, according to the sixth embodiment described above, the magnetic wave gear device 1F has a constitution in which the stator 30, the low-speed rotor 10, and the high-speed rotor 20 are provided in a concentric shape; in which the low-speed rotor 10 has first magnetic bodies 11 and first permanent magnets 12, the magnetic poles of which face the same direction, alternately in a circumferential direction; in which the high-speed rotor 20 is disposed between the stator 30 and the low-speed rotor 10 and has the second permanent magnets 22A and 22B, the magnetic poles of which face different directions, alternately in a circumferential direction; in which the stator 30 has a plurality of third magnetic bodies 31 provided with the slots 34 in which coils 33 can be wound, and a plurality of third permanent magnets 32A and 32B disposed alternately in a circumferential direction such that directions of the magnetic poles are different from each other; and in which the relationship of $Ns=Nl\pm Nh$ is satisfied when the number of magnetic poles of the low-speed rotor 10 is defined as Nl, the number of pole pairs of the high-speed rotor 20 is defined as Nh, and the number of slots of the stator 30 is defined as Ns, and thereby the torque constant can be improved. Hereinafter, this magnetic wave gear device 1F is sometimes referred to as a combined PM (a rotor replacement structure).

(Examples)

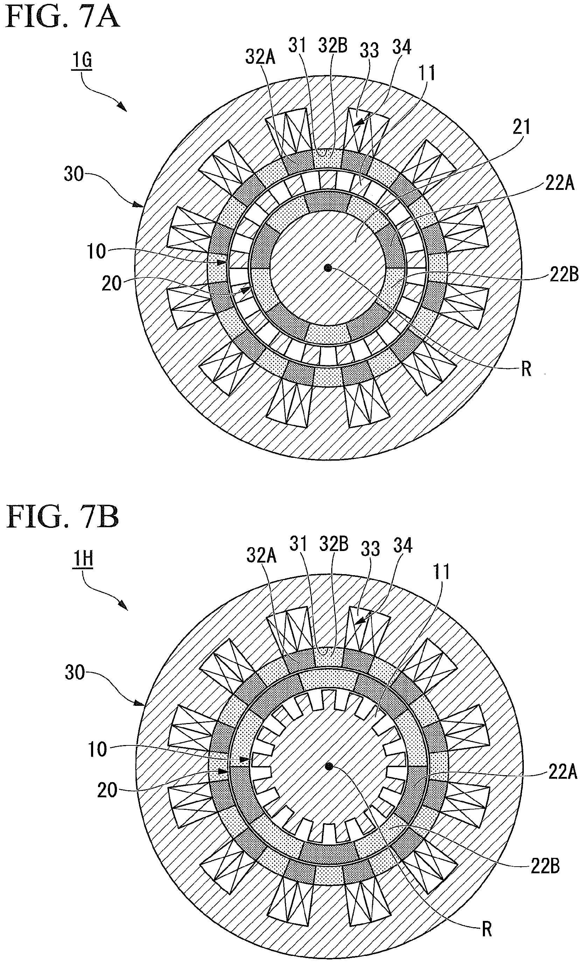

Next, effects of the present invention will be made more obvious by comparison with comparative examples shown in FIG. 7A to 9B.

FIG. 7A is a cross-sectional view showing a magnetic wave gear device 1G as comparative example 1.

As shown in FIG. 7A, the magnetic wave gear device 1G has a low-speed rotor 10, a high-speed rotor 20, and a stator 30. The high-speed rotor 20 and the stator 30 have the same constitutions as those of the fifth embodiment.

The low-speed rotor 10 has an approximately cylindrical shape, and is disposed between the high-speed rotor 20 and the stator 30. The low-speed rotor 10 has first magnetic bodies 11 but not first permanent magnets 12. The plurality of first magnetic bodies 11 are formed of, for instance, an electromagnetic steel sheet, and are arranged around a rotational axis R at regular intervals. The first magnetic bodies 11 are integrated by, for instance, resin plates (not shown), and interrelationships such as a pitch between the two sides are maintained. Hereinafter, this magnetic wave gear device 1G is sometimes referred to as a double-sided PM.

FIG. 7B is a cross-sectional view showing a magnetic wave gear device 1H as comparative example 2.

As shown in FIG. 7B, the magnetic wave gear device 1H has a low-speed rotor 10, a high-speed rotor 20, and a stator 30. In this magnetic wave gear device 1G, the low-speed rotor 10 is disposed inside, and the high-speed rotor 20 is disposed outside. The high-speed rotor 20 and the stator 30 have the same constitutions as those of the sixth embodiment.

The low-speed rotor 10 has an approximately columnar shape, and is disposed inside the high-speed rotor 20. The low-speed rotor 10 has first magnetic bodies 11, but not first permanent magnets 12. The plurality of first magnetic bodies 1111 are formed of, for instance, an electromagnetic steel sheet, and are arranged around a rotational axis R at regular intervals. Hereinafter, this magnetic wave gear device 1H is sometimes referred to as a double-sided PM (a rotor replacement structure).

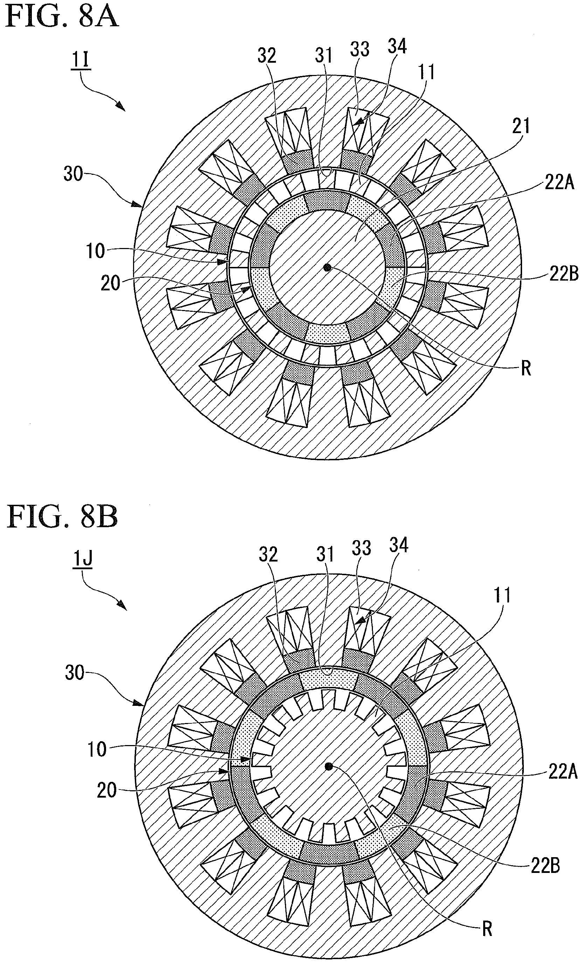

FIG. 8A is a cross-sectional view showing a magnetic wave gear device 1I as comparative example 3.

As shown in FIG. 8A, the magnetic wave gear device 1I has a low-speed rotor 10, a high-speed rotor 20, and a stator 30. The low-speed rotor 10 has the same constitution as that of comparative example 1. Further, the high-speed rotor 20 and the stator 30 have the same constitutions as those of the third embodiment. Hereinafter, this magnetic wave gear device 1I is sometimes referred to as a double-sided 3/4PM.

FIG. 8B is a cross-sectional view showing a magnetic wave gear device 1J as comparative example 4.

As shown in FIG. 8B, the magnetic wave gear device 1J has a low-speed rotor 10, a high-speed rotor 20, and a stator 30. In this magnetic wave gear device 1J, the low-speed rotor 10 is disposed inside, and the high-speed rotor 20 is disposed outside. The low-speed rotor 10 has the same constitution as that of comparative example 2. Further, the high-speed rotor 20 has the same constitution as that of the sixth embodiment. In addition, the stator 30 has the same constitution as that of the first embodiment. Hereinafter, this magnetic wave gear device 1J is sometimes referred to as a double-sided 3/4PM (a rotor replacement structure).

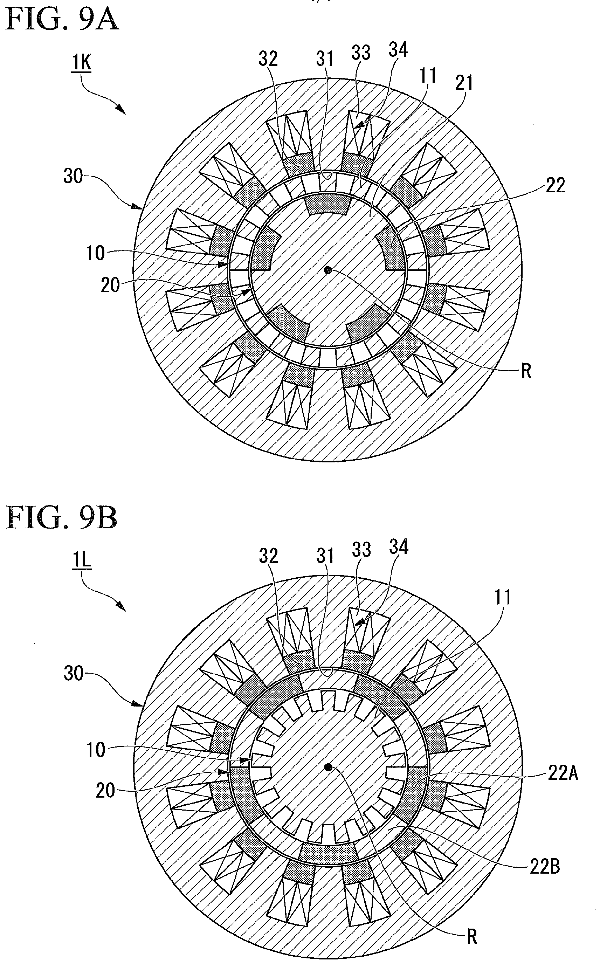

FIG. 9A is a cross-sectional view showing a magnetic wave gear device 1K as comparative example 5.

As shown in FIG. 9A, the magnetic wave gear device 1K has a low-speed rotor 10, a high-speed rotor 20, and a stator 30. The low-speed rotor 10 has the same constitution as that of comparative example 1. Further, the high-speed rotor 20 and the stator 30 have the same constitutions as those of the first embodiment. Hereinafter, this magnetic wave gear device 1K is sometimes referred to as a double-sided half PM.

FIG. 9B is a cross-sectional view showing a magnetic wave gear device 1L as comparative example 6.

As shown in FIG. 9B, the magnetic wave gear device 1L has a low-speed rotor 10, a high-speed rotor 20, and a stator 30. In this magnetic wave gear device 1L, the low-speed rotor 10 is disposed inside, and the high-speed rotor 20 is disposed outside. The low-speed rotor 10 has the same constitution as that of comparative example 2. Further, the high-speed rotor 20 and the stator 30 have the same constitutions as those of the second embodiment. Hereinafter, this magnetic wave gear device 1L is sometimes referred to as a double-sided half PM (a rotor replacement structure).

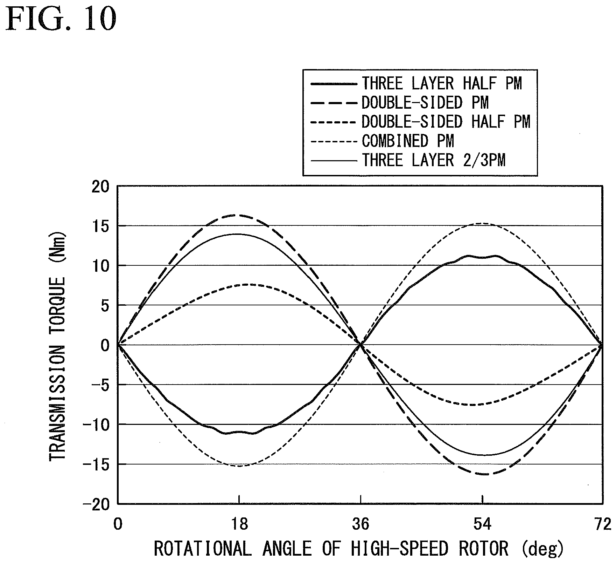

FIG. 10 is a graph showing a relationship between transmission torque of the magnetic wave gear device 1A, 1C, 1E, 1G, or 1K and a rotational angle of the high-speed rotor 20.

As shown in FIG. 10, it can be seen that the transmission torque has a relationship of the double-sided PM≅the combined PM>the three layer 2/3PM>the three layer half PM>the double-sided half PM.

For this reason, it can be seen that the double-sided PM (the magnetic wave gear device 1G) and the combined PM (the magnetic wave gear device 1E) are almost identical to each other and that the first permanent magnets 12 do not function in relation to the transmission torque. Furthermore, it can be seen that the three layer half PM (the magnetic wave gear device 1A) is greater than the double-sided half PM (the magnetic wave gear device 1K) and that the first permanent magnets 12 functions in relation to the transmission torque.

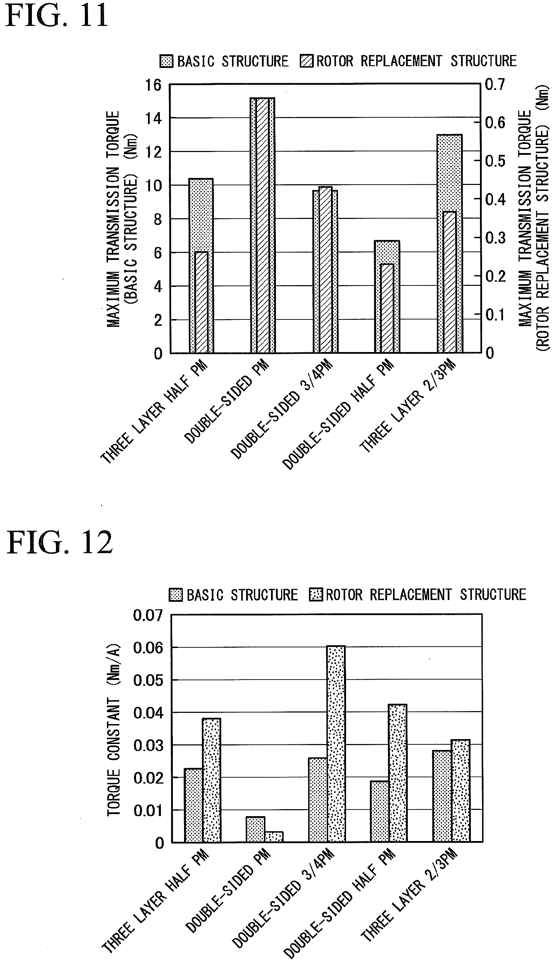

FIG. 11 is a graph showing a relationship between maximum transmission torque of the magnetic wave gear device (the basic structure) 1A, 1C, 1G, 1I or 1K and maximum transmission torque of the magnetic wave gear device (the rotor replacement structure) 1B, 1D, 1H, 1J, or 1L.

As shown in FIG. 11, it can be seen that the maximum transmission torque of the basic structure has a relationship of the double-sided PM>the three layer 2/3PM>the three layer half PM>the double-sided 3/4PM>the double-sided half PM.

It can be seen that the rotor replacement structure has a relationship of the double-sided PM>the double-sided 3/4PM>the three layer 2/3PM>the three layer half PM>the double-sided half PM.

For this reason, it can be seen that, when positions of the low-speed rotor 10 and the high-speed rotor 20 are replaced, the maximum transmission torque is reduced to about 1/10. Furthermore, it can be seen that the magnetic wave gear devices (the three layer half PM, the double-sided half PM, and the three layer 2/3PM) in which the second magnetic bodies 21 are included in the high-speed rotor 20 have a great rate of the reduction of the maximum transmission torque. This is considered to be because the magnetic flux is obstructed by the second magnetic bodies 21 of the high-speed rotor 20.

FIG. 12 is a graph showing a relationship between a torque constant of the magnetic wave gear device (the basic structure) 1A, 1C, 1G, 1I, or 1K and a torque constant of the magnetic wave gear device (the rotor replacement structure) 1B, 1D, 1H, 1J, or 1L. The torque constant is calculated from an induced voltage when a rotor is rotated.

As shown in FIG. 12, it can be seen that the torque constant of the basic structure has a relationship of the three layer 2/3PM>the double-sided 3/4PM>the three layer half PM>the double-sided half PM>the double-sided PM. The double-sided 3/4PM has a greater torque constant than the three layer half PM or the double-sided half PM because the number of permanent magnets of the high-speed rotor 20 is great. The three layer half PM has a torque constant to the same extent as the double-sided 3/4PM regardless of how few permanent magnets it has. For this reason, it can be seen that, when the first permanent magnets 12 are provided for the low-speed rotor 10, the torque constant is increased.

It can be seen that the torque constant of the rotor replacement structure has a relationship of the double-sided 3/4PM>the double-sided half PM>the three layer half PM>the three layer 2/3PM>the double-sided PM. For this reason, it can be seen that, when positions of the low-speed rotor 10 and the high-speed rotor 20 are replaced, the torque constant is increased. Furthermore, it can be seen that, even if the same number of permanent magnets are provided in the double-sided PM as in the double-sided 3/4PM for the high-speed rotor 20, the torque constant is reduced. This is considered to be because the third permanent magnets 32B located in front of the third magnetic bodies 31 of the stator 30 of the double-sided PM act as magnetic resistance.

While the embodiments of the present invention have been described with reference to the attached drawings, the present invention is not limited to the above embodiments. All the shapes and combinations of the components shown in the aforementioned embodiments are one example, and can be variously modified based on design requirements without departing from the spirit and scope of the present invention.

For example, in the present embodiments, the constitution in which the number of magnetic poles of the low-speed rotor 10 is 17, the number of pole pairs of the high-speed rotor 20 is 5, and the number of slots of the stator 30 is 12 is given by way of example. However, the present invention is not limited to this constitution, as long as the relation expression (1) is satisfied.

For example, in the present embodiments, the constitution in which the magnetic wave gear device of the present invention is applied to a motor (an electric motor) is given by way of example. However, the present invention is not limited to this constitution, and may also be applied to a power generator. Moreover, in the power generator, the present invention may be suitably applied to a large wind power generator.

[Industrial Applicability]

According to the present invention, the magnetic wave gear device capable of improving the torque constant can be obtained.

[Reference Signs List]

| | |
|---|---|
| 1A, 1B, 1C, 1D, 1E, 1F | Magnetic wave gear device |
| 10 | Low-speed rotor (first rotor) |
| 11 | First magnetic body |
| 12, 12A, 12B | First permanent magnet |
| 20 | High-speed rotor (second rotor) |
| 21 | Second magnetic body |
| 22, 22A, 22B | Second permanent magnet |
| 30 | Stator |
| 31 | Third magnetic body |
| 32, 32A, 32B | Third permanent magnet |
| 33 | Coil |
| 34 | Slot |
| R | Rotational axis |

**Claims**

1. A magnetic wave gear device (1A) in which a stator (30), a first rotor (10), and a second rotor (20) are provided in a concentric shape, a center of which is a rotational axis (R), wherein:

   the first rotor (10) is radially disposed between the stator (30) and the second rotor (20), and has first magnetic bodies (11) and first permanent magnets (12), in which the first magnetic bodies (11) are arranged around the rotational axis (R) at regular intervals, and the first permanent magnets (12) are each arranged between the neighboring first magnetic bodies (11) in a circumferential direction, and the first permanent magnets (12) are all magnetized outward, and magnetic poles thereof are made identical;
   the second rotor (20) has second magnetic bodies (21) and second permanent magnets (22), in which the second magnetic bodies (21) are arranged around the rotational axis (R) at regular intervals, and the second permanent magnets (22) are each arranged between the neighboring second magnetic bodies (21) in the circumferential direction, and like directions of the magnetic poles of the first permanent magnets (12), the second permanent magnets (22) are all magnetized outward, and magnetic poles thereof are made identical; the stator (30) has third magnetic bodies (31) that protrude inward in a radial direction and which are provided with slots (34) in which coils (33) can be wound, the coils (33) being wound around the third magnetic bodies (31), and third permanent magnets (32), in which the third magnetic bodies (31) are arranged around the rotational axis (R) at regular intervals and the third permanent magnets (32) are each arranged between the neighbouring third magnetic bodies (31) in the circumferential direction, and like directions of the magnetic poles of the first permanent magnets (12), the third permanent magnets (32) are all magnetized outward, and magnetic poles thereof are made identical; and

a relationship of $Ns = Nl \pm Nh$ is satisfied when Nl is the number of magnetic poles of the first rotor (10), Nh is the number of pole pairs of the second rotor (20), and Ns is the number of slots of the stator (30).

2.   A magnetic wave gear device (1B) in which a stator (30), a first rotor (10), and a second rotor (20) are provided in a concentric shape, a center of which is a rotational axis (R), wherein:

the first rotor (10) has first magnetic bodies (11) and first permanent magnets (12), in which the first magnetic bodies (11) are arranged around the rotational axis (R) at regular intervals, and the first permanent magnets are each arranged between the neighboring first magnetic bodies (11) in a circumferential direction, and the first permanent magnets are all magnetized outward, and magnetic poles thereof are made identical; the second rotor (20) is radially disposed between the stator (30) and the first rotor (10), and has second magnetic bodies (21) and second permanent magnets (22), in which the second magnetic bodies (21) are arranged around the rotational axis (R) at regular intervals, and the second permanent magnets are each arranged between the neighboring second magnetic bodies (21) in the circumferential direction, and like directions of the magnetic poles of the first permanent magnets (12), the second permanent magnets (22) are all magnetized outward, and magnetic poles thereof are made identical; the stator has third magnetic bodies (31) that protrude inward in a radial direction and which are provided with slots (34) in which coils (33) can be wound, the coils (33) being wound around the third magnetic bodies (31), and third permanent magnets (32), in which the third magnetic bodies (31) are arranged around the rotational axis (R) at regular intervals and the third permanent magnets are each arranged between the neighbouring third magnetic bodies (31) in the circumferential direction, and like directions of the magnetic poles of the first permanent magnets (12), the third permanent magnets (32) are all magnetized outward, and magnetic poles thereof are made identical; and

a relationship of $Ns = Nl \pm Nh$ is satisfied when Nl is the number of magnetic poles of the first rotor (10), Nh is the number of pole pairs of the second rotor (20), and Ns is the number of slots of the stator (30).

3.   A magnetic wave gear device (1C) in which a stator (30), a first rotor (10), and a second rotor (20) are provided in a concentric shape, a center of which is a rotational axis (R), wherein:

the first rotor (10) is radially disposed between the stator (30) and the second rotor (20), and has first magnetic bodies (11) and first permanent magnets (12), in which the first magnetic bodies (11) are arranged around the rotational axis (R) at regular intervals, and the first permanent magnets (12) are each arranged between the neighboring first magnetic bodies (11) in a circumferential direction, and the first permanent magnets are all magnetized outward, and magnetic poles thereof are made identical; the second rotor (20) has second permanent magnets (22A, 22B), which are arranged around the rotational axis (R) at regular intervals in the circumferential direction, magnetic poles of these second permanent magnets being such that adjacent second permanent magnets (22A, 22B) have magnetic poles facing in opposite directions, one inward and the other outward; the stator (30) has third magnetic bodies (31) that protrude inward in a radial direction and which are provided with slots (34) in which coils (33) can be wound, the coils (33) being wound around the third magnetic bodies (31), and third permanent magnets (32), in which the third magnetic bodies (31) are arranged around the rotational axis (R) at regular intervals and the third permanent magnets (32) are each arranged between the neighbouring third magnetic bodies (31) in the circumferential direction, and like directions of the magnetic poles of the first permanent magnets (12), the third permanent magnets (32) are all magnetized outward, and magnetic poles thereof are made identical; and

a relationship of $Ns = Nl \pm Nh$ is satisfied when Nl is the number of magnetic poles of the first rotor (10), Nh is the number of pole pairs of the second rotor (20), and Ns is the number of slots of the stator (30).

4.   A magnetic wave gear device (ID) in which a stator (30), a first rotor (10), and a second rotor (20) are provided in a concentric shape, a center of which is a rotational axis (R), wherein:

the first rotor (10) has first permanent magnets (12A, 12B), which are arranged around the rotational axis (R) at regular intervals in a circumferential direction, magnetic poles of these first permanent magnets being such that adjacent first permanent magnets have magnetic poles facing opposite directions, one inward and the other outward;

the second rotor (20) is radially disposed between the stator (30) and the first rotor (10), and has second magnetic bodies (21) and second permanent magnets (22), in which the second magnetic bodies (21) are arranged around the rotational axis (R) at regular intervals, and the second permanent magnets (22) are each arranged between the neighboring second magnetic bodies (21) in the circumferential direction, and the second permanent magnets (22) are all magnetized outward, and magnetic poles thereof are made identical;

the stator (30) has third magnetic bodies (31) that protrude inward in a radial direction and which are provided with slots (34) in which coils (33) can be wound, the coils (33) being wound around the third magnetic bodies (31), and third permanent magnets (32), in which the third magnetic bodies (31) are arranged around the rotational axis (R) at regular intervals and the third permanent magnets (32) are each arranged between the neighbouring third magnetic bodies (31) in the circumferential direction, and like directions of the magnetic poles of the second permanent magnets (22), the third permanent magnets (32) are all magnetized outward, and magnetic poles thereof are made identical; and

a relationship of Ns = Nl±Nh is satisfied when Nl is the number of magnetic poles of the first rotor (10), Nh is the number of pole pairs of the second rotor (20), and Ns is the number of slots of the stator (30).

5. A magnetic wave gear device (1E) in which a stator (30), a first rotor (10), and a second rotor (20) are provided in a concentric shape, a center of which is a rotational axis (R), wherein:

the first rotor (10) is radially disposed between the stator (30) and the second rotor (20), and has first magnetic bodies (11) and first permanent magnets (12), in which the first magnetic bodies (11) are arranged around the rotational axis (R) at regular intervals,and the first permanent magnets (12) are each arranged between the neighboring first magnetic bodies (11) in a circumferential direction, and the first permanent magnets (12) are all magnetized outward, and magnetic poles thereof are made identical;

the second rotor (20) has second permanent magnets (22A, 22B), which are arranged around the rotational axis (R) at regular intervals in the circumferential direction, magnetic poles of these second permanent magnets being such that adjacent second permanent magnets (22A, 22B) have magnetic poles facing in opposite directions, one inward and the other outward;

the stator (30) has third magnetic bodies (31) that protrude inward in a radial direction and which are provided with slots (34) in which coils (33) can be wound, the coils (33) being wound around the third magnetic bodies (31), and third permanent magnets (32A, 32B), in which the third permanent magnets (31) are arranged around the rotational axis (R) at regular intervals in the circumferential direction, and magnetic poles of these third permanent magnets being such that adjacent third permanent magnets (32A, 32B) have magnetic poles facing opposite directions, one inward and the other outward; and

a relationship of Ns = Nl±Nh is satisfied when Nl is the number of magnetic poles of the first rotor (10), Nh is the number of pole pairs of the second rotor (20), and Ns is the number of slots of the stator (30).

6. A magnetic wave gear device (1F) in which a stator (30), a first rotor (10), and a second rotor (20) are provided in a concentric shape, a center of which is a rotational axis (R), wherein:

the first rotor (10) has first magnetic bodies (11) and first permanent magnets (12), in which the first magnetic bodies (11) are arranged around the rotational axis (R) at regular intervals, and the first permanent magnets (12) are each arranged between the neighboring first magnetic bodies (11) in a circumferential direction, and the first permanent magnets are all magnetized outward, and magnetic poles thereof are made identical;

the second rotor (20) is radially disposed between the stator and the first rotor, and has second permanent magnets (22A, 22B) which are arranged around the rotational axis (R) at regular intervals in the circumferential direction, magnetic poles of these second permanent magnets being such that adjacent second permanent magnets (22A, 22B) have magnetic poles facing in opposite directions, one inward and the other outward;

the stator (30) has third magnetic bodies (31) that protrude inward in a radial direction and which are provided with slots (34) in which coils (33) can be wound, the coils (33) being wound around the third magnetic bodies (31), and third permanent magnets (32A, 32B), in which the third permanent magnets (31) are arranged around the rotational axis (R) at regular intervals in the circumferential direction, and magnetic poles of these third permanent magnets are such that adjacent third permanent magnets (32A, 32B) have magnetic poles facing in opposite directions, one inward and the other outward; and

a relationship of Ns = Nl±Nh is satisfied when Nl is the number of magnetic poles of the first rotor, Nh is the number of pole pairs of the second rotor, and Ns is the number of slots of the stator.

7. A magnetic wave gear device (1A, 1B, 1C, 1D, 1E, 1F) according to any one of the preceding claims, wherein the first rotor (10) is a low-speed rotor and the second rotor (20) is a high-speed rotor.

8. A magnetic wave gear device (1A, 1B, 1C, 1D, 1E, 1F) according to any one of the preceding claims, wherein each the permanent magnet is formed of a neodymium magnet.

**Patentansprüche**

1. Magnetwellengetriebevorrichtung (1A), bei der ein Stator (30), ein erster Rotor (10) und ein zweiter Rotor (20) in einer konzentrischen Form vorgesehen sind, wobei ein Mittelpunkt davon eine Drehachse (R) ist, wobei:

der erste Rotor (10) radial zwischen dem Stator (30) und dem zweiten Rotor (20) angeordnet ist und erste Magnetkörper (11) und erste Permanentmagnete (12) aufweist, wobei die ersten Magnetkörper (11) in regelmäßigen Abständen um die Drehachse (R) herum angeordnet sind und die ersten Permanentmagnete (12) jeweils zwischen den benachbarten ersten Magnetkörpern (11) in Umfangsrichtung angeordnet sind, und die ersten Permanentmagnete (12) alle nach außen magnetisiert und deren Magnetpole davon identisch ausgebildet sind;
der zweite Rotor (20) zweite Magnetkörper (21) und zweite Permanentmagnete (22) aufweist, wobei die zweiten Magnetkörper (21) in regelmäßigen Abständen um die Drehachse (R) herum angeordnet sind, und die zweiten Permanentmagnete (22) jeweils zwischen den benachbarten zweiten Magnetkörpern (21) in Umfangsrichtung angeordnet sind, und ähnlich den Richtungen der Magnetpole der ersten Permanentmagnete (12) sind die zweiten Permanentmagnete (22) alle nach außen magnetisiert und deren Magnetpole identisch ausgebildet;
der Stator (30) dritte Magnetkörper (31) aufweist, die in radialer Richtung nach innen ragen und mit Schlitzen (34) versehen sind, in denen Spulen (33) gewickelt werden können, wobei die Spulen (33) um die dritten Magnetkörper (31) gewickelt sind, und dritte Permanentmagnete (32), in denen die dritten Magnetkörper (31) in regelmäßigen Abständen um die Drehachse (R) angeordnet sind und die dritten Permanentmagnete (32) jeweils zwischen den benachbarten dritten Magnetkörpern (31) in Umfangsrichtung angeordnet sind, und ähnlich den Richtungen der Magnetpole der ersten Permanentmagnete (12) sind die dritten Permanentmagnete (32) alle nach außen magnetisiert und deren Magnetpole identisch ausgebildet; und
eine Beziehung von Ns = N1 ± Nh erfüllt ist, wenn N1 die Anzahl der Magnetpole des ersten Rotors (10) ist, Nh die Anzahl der Polpaare des zweiten Rotors (20) ist und Ns die Anzahl der Schlitze des Stators (30) ist.

2. Magnetwellengetriebevorrichtung (1B), bei der ein Stator (30), ein erster Rotor (10) und ein zweiter Rotor (20) in einer konzentrischen Form vorgesehen sind, wobei ein Mittelpunkt davon eine Drehachse (R) ist, wobei:

der erste Rotor (10) erste Magnetkörper (11) und erste Permanentmagnete (12) aufweist, wobei die ersten Magnetkörper (11) in regelmäßigen Abständen um die Drehachse (R) herum angeordnet sind und die ersten Permanentmagnete jeweils zwischen den benachbarten ersten Magnetkörpern (11) in Umfangsrichtung angeordnet sind, und die ersten Permanentmagnete alle nach außen magnetisiert und deren Magnetpole identisch ausgebildet sind;
der zweite Rotor (20) radial zwischen dem Stator (30) und dem ersten Rotor (10) angeordnet ist und zweite Magnetkörper (21) und zweite Permanentmagnete (22) aufweist, wobei die zweiten Magnetkörper (21) in regelmäßigen Abständen um die Drehachse (R) herum angeordnet sind und die zweiten Permanentmagnete jeweils zwischen den benachbarten zweiten Magnetkörpern (21) in Umfangsrichtung und ähnlich den Richtungen der Magnetpole der ersten Permanentmagnete (12) sind die zweiten Permanentmagnete (22) alle nach außen magnetisiert und Magnetpole davon identisch ausgebildet;
der Stator dritte Magnetkörper (31) aufweist, die in radialer Richtung nach innen ragen und mit Schlitzen (34) versehen sind, in die Spulen (33) gewickelt werden können, wobei die Spulen (33) um die dritten Magnetkörper (31) gewickelt sind, und dritte Permanentmagnete (32), wobei die dritten Magnetkörper (31) in regelmäßigen Abständen um die Drehachse (R) herum angeordnet sind und die dritten Permanentmagnete jeweils zwischen den benachbarten dritten Magnetkörpern (31) in Umfangsrichtung und ähnlich den Magnetpolen der ersten Permanentmagnete (12) sind die dritten Permanentmagnete (32) alle nach außen magnetisiert und deren Magnetpole identisch ausgebildet; und
eine Beziehung von Ns = N1 ± Nh erfüllt ist, wenn N1 die Anzahl der Magnetpole des ersten Rotors (10) ist, Nh die Anzahl der Polpaare des zweiten Rotors (30) ist und Ns die Anzahl der Schlitze des Stators (30) ist.

3. Magnetwellengetriebevorrichtung (1C), bei der ein Stator (30), ein erster Rotor (10) und ein zweiter Rotor (20) in einer konzentrischen Form vorgesehen sind, wobei ein Mittelpunkt davon eine Drehachse (R) ist, wobei:

der erste Rotor (10) radial zwischen dem Stator (30) und dem zweiten Rotor (20) angeordnet ist und erste Magnetkörper (11) und erste Permanentmagnete (12) aufweist, wobei die ersten Magnetkörper (11) in regelmäßigen Abständen um die Drehachse (R) herum angeordnet sind und die ersten Permanentmagnete (12) jeweils zwischen den benachbarten ersten Magnetkörpern (11) in Umfangsrichtung angeordnet sind, und die ersten Permanentmagnete alle nach außen magnetisiert und deren Magnetpole identisch ausgebildet sind;
der zweite Rotor (20) zweite Permanentmagnete (22A, 22B) aufweist, die um die Drehachse (R) in regelmäßigen Abständen in Umfangsrichtung angeordnet sind, wobei die Magnetpole dieser zweiten Permanentmagnete so gestaltet sind, dass benachbarte zweite Permanentmagnete (22A, 22B) Magnetpole aufweisen, die in entgegengesetzte Richtungen zeigen, einer nach innen und der andere nach außen;
der Stator (30) dritte Magnetkörper (31) aufweist, die in radialer Richtung nach innen ragen und mit Schlitzen (34) versehen sind, in die Spulen (33) gewickelt werden können, wobei die Spulen (33) um die dritten Magnetkörper (31) gewickelt sind, und dritte Permanentmagnete (32), wobei die dritten Magnetkörper (31) in regelmäßigen Abständen um die Drehachse (R) herum angeordnet sind und die dritten Permanentmagnete (32) jeweils zwischen den benachbarten dritten Magnetkörpern (31) in Umfangsrichtung und ähnlich den Magnetpolen der ersten Permanentmagnete (12) sind die dritten Permanentmagnete (32) alle nach außen magnetisiert und deren Magnetpole identisch ausgebildet; und
eine Beziehung von Ns = N1±Nh erfüllt ist, wenn N1 die Anzahl der Magnetpole des ersten Rotors (10) ist, Nh die Anzahl der Polpaare des zweiten Rotors (20) ist und Ns die Anzahl der Schlitze des Stators (30) ist.

4. Magnetwellengetriebevorrichtung (1D), bei der ein Stator (30), ein erster Rotor (10) und ein zweiter Rotor (20) in einer konzentrischen Form vorgesehen sind, wobei ein Mittelpunkt davon eine Drehachse (R) ist, wobei:

der erste Rotor (10) erste Permanentmagnete (12A, 12B) aufweist, die um die Drehachse (R) in regelmäßigen Abständen in einer Umfangsrichtung angeordnet sind, wobei die Magnetpole dieser ersten Permanentmagnete so gestaltet sind, dass benachbarte erste Permanentmagnete Magnetpole aufweisen, die in entgegengesetzte Richtungen zeigen, einer nach innen und der andere nach außen;
der zweite Rotor (20) radial zwischen dem Stator (30) und dem ersten Rotor (10) angeordnet ist und zweite Magnetkörper (21) und zweite Permanentmagnete (22) aufweist, wobei die zweiten Magnetkörper (21) in regelmäßigen Abständen um die Drehachse (R) herum angeordnet sind und die zweiten Permanentmagnete (22) jeweils zwischen den benachbarten zweiten Magnetkörpern (21) in der Umfangsrichtung angeordnet sind, und die zweiten Permanentmagnete (22) alle nach außen magnetisiert und deren Magnetpole identisch ausgebildet;
der Stator (30) dritte Magnetkörper (31) aufweist, die in radialer Richtung nach innen ragen und mit Schlitzen (34) versehen sind, in die Spulen (33) gewickelt werden können, wobei die Spulen (33) um die dritten Magnetkörper (31) gewickelt sind, und dritte Permanentmagnete (32), wobei die dritten Magnetkörper (31) in regelmäßigen Abständen um die Drehachse (R) herum angeordnet sind und die dritten Permanentmagnete (32) jeweils zwischen den benachbarten dritten Magnetkörpern (31) in Umfangsrichtung und ähnlich den Richtungen der Magnetpole der zweiten Permanentmagnete (22) sind die dritten Permanentmagnete (32) alle nach außen magnetisiert und deren Magnetpole identisch ausgebildet; und
eine Beziehung von Ns = N1±Nh erfüllt ist, wenn N1 die Anzahl der Magnetpole des ersten Rotors (10) ist, Nh die Anzahl der Polpaare des zweiten Rotors (20) ist und Ns die Anzahl der Schlitze des Stators (30) ist.

5. Magnetwellengetriebevorrichtung (1E), bei der ein Stator (30), ein erster Rotor (10) und ein zweiter Rotor (20) in einer konzentrischen Form vorgesehen sind, wobei ein Mittelpunkt davon eine Drehachse (R) ist, wobei:

der erste Rotor (10) radial zwischen dem Stator (30) und dem zweiten Rotor (20) angeordnet ist und erste Magnetkörper (11) und erste Permanentmagnete (12) aufweist, wobei die ersten Magnetkörper (11) in regelmäßigen Abständen um die Drehachse (R) herum angeordnet sind und die ersten Permanentmagnete (12) jeweils zwischen den benachbarten ersten Magnetkörpern (11) in Umfangsrichtung angeordnet sind, und die ersten Permanentmagnete (12) alle nach außen magnetisiert und deren Magnetpole identisch ausgebildet sind;
der zweite Rotor (20) zweite Permanentmagnete (22A, 22B) aufweist, die um die Drehachse (R) in regelmäßigen Abständen in Umfangsrichtung angeordnet sind, wobei die Magnetpole dieser zweiten Permanentmagnete so gestaltet sind, dass benachbarte zweite Permanentmagnete (22A, 22B) Magnetpole aufweisen, die in entgegengesetzte Richtungen zeigen, einer nach innen und der andere nach außen;
der Stator (30) dritte Magnetkörper (31) aufweist, die in radialer Richtung nach innen ragen und mit Schlitzen (34) versehen sind, in die Spulen (33) gewickelt werden können, wobei die Spulen (33) um die dritten Magnetkörper (31) gewickelt sind, und dritte Permanentmagnete (32A, 32B), wobei die dritten Permanentmagnete (31) in regelmäßigen Abständen in Umfangsrichtung um die Drehachse (R) herum angeordnet sind und die Magnetpole dieser dritten Permanentmagnete so gestaltet sind, dass benachbarte dritte Permanentmagnete (32A, 32B) Magnetpole aufweisen, die in entgegengesetzte Richtungen zeigen, einer nach innen und der andere nach außen; und

eine Beziehung von Ns = N1±Nh erfüllt ist, wenn N1 die Anzahl der Magnetpole des ersten Rotors (10) ist, Nh die Anzahl der Polpaare des zweiten Rotors (20) ist und Ns die Anzahl der Schlitze des Stators (30) ist.

6. Magnetwellengetriebevorrichtung (1F), bei der ein Stator (30), ein erster Rotor (10) und ein zweiter Rotor (20) in einer konzentrischen Form vorgesehen sind, wobei ein Mittelpunkt davon eine Drehachse (R) ist, wobei:

der erste Rotor (10) erste Magnetkörper (11) und erste Permanentmagnete (12) aufweist, wobei die ersten Magnetkörper (11) in regelmäßigen Abständen um die Drehachse (R) herum angeordnet sind und die ersten Permanentmagnete (12) jeweils zwischen den benachbarten ersten Magnetkörpern (11) in Umfangsrichtung angeordnet sind, und die ersten Permanentmagnete alle nach außen magnetisiert und deren Magnetpole identisch ausgebildet sind;

der zweite Rotor (20) radial zwischen dem Stator und dem ersten Rotor angeordnet ist und zweite Permanentmagnete (22A, 22B) aufweist, die in regelmäßigen Abständen in Umfangsrichtung um die Drehachse (R) herum angeordnet sind, wobei die Magnetpole dieser zweiten Permanentmagnete so gestaltet sind, dass benachbarte zweite Permanentmagnete (22A, 22B) Magnetpole aufweisen, die in entgegengesetzte Richtungen zeigen, einer nach innen und der andere nach außen;

der Stator (30) dritte Magnetkörper (31) aufweist, die in radialer Richtung nach innen ragen und mit Schlitzen (34) versehen sind, in die Spulen (33) gewickelt werden können, wobei die Spulen (33) um die dritten Magnetkörper (31) gewickelt sind, und dritte Permanentmagnete (32A, 32B), wobei die dritten Permanentmagnete (31) in regelmäßigen Abständen in Umfangsrichtung um die Drehachse (R) herum angeordnet sind und die Magnetpole dieser dritten Permanentmagnete so gestaltet sind, dass benachbarte dritte Permanentmagnete (32A, 32B) Magnetpole aufweisen, die in entgegengesetzte Richtungen zeigen, einer nach innen und der andere nach außen; und

eine Beziehung von Ns = N1±Nh erfüllt ist, wenn N1 die Anzahl der Magnetpole des ersten Rotors ist, Nh die Anzahl der Polpaare des zweiten Rotors ist und Ns die Anzahl der Schlitze des Stators ist.

7. Magnetwellengetriebevorrichtung (1A, 1B, 1C, 1D, 1E, 1F) nach einem der vorhergehenden Ansprüche, wobei der erste Rotor (10) ein Rotor mit niedriger Drehzahl und der zweite Rotor (20) ein Rotor mit hoher Drehzahl ist.

8. Magnetwellengetriebevorrichtung (1A, 1B, 1C, 1D, 1E, 1F) nach einem der vorhergehenden Ansprüche, wobei jeder Permanentmagnet aus einem Neodym-Magneten gebildet ist.

## Revendications

1. Dispositif d'engrenage à ondes magnétiques (1A) dans lequel un stator (30), un premier rotor (10) et un second rotor (20) sont placés selon une forme concentrique, dont un centre est un axe de rotation (R), dans lequel :
le premier rotor (10) est disposé radialement entre le stator (30) et le second rotor (20), et possède des premiers corps magnétiques (11) et des premiers aimants permanents (12), dans lequel les premiers corps magnétiques (11) sont agencés autour de l'axe de rotation (R) à intervalles réguliers, et les premiers aimants permanents (12) sont chacun agencés entre les premiers corps magnétiques (11) voisins dans une direction circonférentielle, et les premiers aimants permanents (12) sont tous magnétisés vers l'extérieur, et leurs pôles magnétiques sont identiques :

le second rotor (20) possède des seconds corps magnétiques (21) et des seconds aimants permanents (22), dans lequel les seconds corps magnétiques (21) sont agencés autour de l'axe de rotation (R) à intervalles réguliers, et les seconds aimants permanents (22) sont chacun agencés entre les seconds corps magnétiques (21) voisins dans la direction circonférentielle, et comme les directions des pôles magnétiques des premiers aimants permanents (12), les seconds aimants permanents (22) sont tous magnétisés vers l'extérieur, et leurs pôles magnétiques sont identiques ;

le stator (30) possède des troisièmes corps magnétiques (31) qui font saillie vers l'intérieur dans une direction radiale et qui sont dotés de fentes (34) dans lesquelles des bobines (33) peuvent être enroulées, les bobines (33) étant enroulées autour des troisièmes corps magnétiques (31), et des troisièmes aimants permanents (32), dans lequel les troisièmes corps magnétiques (31) sont agencés autour de l'axe de rotation (R) à intervalles réguliers et les troisièmes aimants permanents (32) sont chacun agencés entre les troisièmes corps magnétiques (31) voisins dans la direction circonférentielle, et comme les directions des pôles magnétiques des premiers aimants permanents (12), les troisièmes aimants permanents (32) sont tous magnétisés vers l'extérieur, et leurs pôles magnétiques sont identiques ; et

une relation Ns = N1±Nh est satisfaite lorsque N1 est le nombre de pôles magnétiques du premier rotor (10), Nh est le nombre de paires de pôles du second rotor (20), et Ns est le nombre de fentes du stator (30).

**2.** Dispositif d'engrenage à ondes magnétiques (1B) dans lequel un stator (30), un premier rotor (10) et un second rotor (20) sont placés selon une forme concentrique, dont un centre est un axe de rotation (R), dans lequel :

le premier rotor (10) possède des premiers corps magnétiques (11) et des premiers aimants permanents (12), dans lequel les premiers corps magnétiques (11) sont agencés autour de l'axe de rotation (R) à intervalles réguliers, et les premiers aimants permanents sont chacun agencés entre les premiers corps magnétiques (11) voisins dans une direction circonférentielle, et les premiers aimants permanents sont tous magnétisés vers l'extérieur, et leurs pôles magnétiques sont identiques ;

le second rotor (20) est disposé radialement entre le stator (30) et le premier rotor (10), et possède des seconds corps magnétiques (21) et des seconds aimants permanents (22), dans lequel les seconds corps magnétiques (21) sont agencés autour de l'axe de rotation (R) à intervalles réguliers, et les seconds aimants permanents sont chacun agencés entre les seconds corps magnétiques (21) voisins dans la direction circonférentielle, et comme les directions des pôles magnétiques des premiers aimants permanents (12), les seconds aimants permanents (22) sont tous magnétisés vers l'extérieur, et leurs pôles magnétiques sont identiques ;

le stator possède des troisièmes corps magnétiques (31) qui font saillie vers l'intérieur dans une direction radiale et qui sont dotés de fentes (34) dans lesquelles des bobines (33) peuvent être enroulées, les bobines (33) étant enroulées autour des troisièmes corps magnétiques (31), et des troisièmes aimants permanents (32), dans lequel les troisièmes corps magnétiques (31) sont agencés autour de l'axe de rotation (R) à intervalles réguliers et les troisièmes aimants permanents sont chacun agencés entre les troisième corps magnétiques (31) voisins dans la direction circonférentielle, et comme les directions des pôles magnétiques des premiers aimants permanents (12), les troisièmes aimants permanents (32) sont tous magnétisés vers l'extérieur, et leurs pôles magnétiques sont identiques ; et

une relation Ns = N1±Nh est satisfaite lorsque N1 est le nombre de pôles magnétiques du premier rotor (10), Nh est le nombre de paires de pôles du second rotor (20), et Ns est le nombre de fentes du stator (30).

**3.** Dispositif d'engrenage à ondes magnétiques (1C) dans lequel un stator (30), un premier rotor (10) et un second rotor (20) sont placés selon une forme concentrique, dont un centre est un axe de rotation (R), dans lequel :
le premier rotor (10) est disposé radialement entre le stator (30) et le second rotor (20), et possède des premiers corps magnétiques (11) et des premiers aimants permanents (12), dans lequel les premiers corps magnétiques (11) sont agencés autour de l'axe de rotation (R) à intervalles réguliers, et les premiers aimants permanents (12) sont chacun agencés entre les premiers corps magnétiques (11) voisins dans une direction circonférentielle, et les premiers aimants permanents sont tous magnétisés vers l'extérieur, et leurs pôles magnétiques sont identiques :

le second rotor (20) possède des seconds aimants permanents (22A, 22B), qui sont agencés autour de l'axe de rotation (R) à intervalles réguliers dans la direction circonférentielle, les pôles magnétiques de ces seconds aimants permanents étant tels que les seconds aimants permanents (22A, 22B) adjacents ont des pôles magnétiques orientés dans des directions opposées, l'un vers l'intérieur et l'autre vers l'extérieur ;

le stator (30) possède des troisièmes corps magnétiques (31) qui font saillie vers l'intérieur dans une direction radiale et qui sont dotés de fentes (34) dans lesquelles des bobines (33) peuvent être enroulées, les bobines (33) étant enroulées autour des troisièmes corps magnétiques (31), et des troisièmes aimants permanents (32), dans lequel les troisièmes corps magnétiques (31) sont agencés autour de l'axe de rotation (R) à intervalles réguliers et les troisièmes aimants permanents (32) sont chacun agencés entre les troisièmes corps magnétiques (31) voisins dans la direction circonférentielle, et comme les directions des pôles magnétiques des premiers aimants permanents (12), les troisièmes aimants permanents (32) sont tous magnétisés vers l'extérieur, et leurs pôles magnétiques identiques ; et

une relation Ns = N1 ± Nh est satisfaite lorsque N1 est le nombre de pôles magnétiques du premier rotor (10), Nh est le nombre de paires de pôles du second rotor (20), et Ns est le nombre de fentes du stator (30).

**4.** Dispositif d'engrenage à ondes magnétiques (1D) dans lequel un stator (30), un premier rotor (10) et un second rotor (20) sont placés selon une forme concentrique, dont un centre est un axe de rotation (R), dans lequel :

le premier rotor (10) possède des premiers aimants permanents (12A, 12B), qui sont agencés autour de l'axe de rotation (R) à intervalles réguliers dans une direction circonférentielle, les pôles magnétiques de ces premiers aimants permanents étant tels que les premiers aimants permanents adjacents ont des pôles magnétiques orientés dans des directions opposées, l'un vers l'intérieur et l'autre vers l'extérieur ;

le second rotor (20) est disposé radialement entre le stator (30) et le premier rotor (10), et possède des seconds corps magnétiques (21) et des seconds aimants permanents (22), dans lequel les seconds corps magnétiques (21) sont agencés autour de l'axe de rotation (R) à intervalles réguliers, et les seconds aimants permanents (22) sont chacun agencés entre les seconds corps magnétiques (21) voisins dans la direction circonférentielle, et les seconds aimants permanents (22) sont tous magnétisés vers l'extérieur, et leurs pôles magnétiques sont identiques ;

le stator (30) possède des troisièmes corps magnétiques (31) qui font saillie vers l'intérieur dans une direction radiale et qui sont dotés de fentes (34) dans lesquelles des bobines (33) peuvent être enroulées, les bobines (33) étant enroulées autour des troisièmes corps magnétiques (31), et des troisièmes aimants permanents (32), dans lequel les troisièmes corps magnétiques (31) sont agencés autour de l'axe de rotation (R) à intervalles réguliers et les troisièmes aimants permanents (32) sont chacun agencés entre les troisièmes corps magnétiques (31) voisins dans la direction circonférentielle, et comme les directions des pôles magnétiques des seconds aimants permanents (22), les troisièmes aimants permanents (32) sont tous magnétisés vers l'extérieur, et leurs pôles magnétiques sont identiques ; et

une relation Ns = N1±Nh est satisfaite lorsque N1 est le nombre de pôles magnétiques du premier rotor (10), Nh est le nombre de paires de pôles du second rotor (20), et Ns est le nombre de fentes du stator (30).

5. Dispositif d'engrenage à ondes magnétiques (1E) dans lequel un stator (30), un premier rotor (10) et un second rotor (20) sont placés selon une forme concentrique, dont un centre est un axe de rotation (R), dans lequel :

le premier rotor (10) est disposé radialement entre le stator (30) et le second rotor (20), et possède des premiers corps magnétiques (11) et des premiers aimants permanents (12), dans lequel les premiers corps magnétiques (11) sont agencés autour de l'axe de rotation (R) à intervalles réguliers, et les premiers aimants permanents (12) sont chacun agencés entre les premiers corps magnétiques (11) voisins dans une direction circonférentielle, et les premiers aimants permanents (12) sont tous magnétisés vers l'extérieur, et leurs pôles magnétiques sont identiques ;

le second rotor (20) possède des seconds aimants permanents (22A, 22B), qui sont agencés autour de l'axe de rotation (R) à intervalles réguliers dans la direction circonférentielle, les pôles magnétiques de ces seconds aimants permanents étant tels que les seconds aimants permanents (22A, 22B) adjacents ont des pôles magnétiques orientés dans des directions opposées, l'un vers l'intérieur et l'autre vers l'extérieur ;

le stator (30) possède des troisièmes corps magnétiques (31) qui font saillie vers l'intérieur dans une direction radiale et qui sont dotés de fentes (34) dans lesquelles des bobines (33) peuvent être enroulées, les bobines (33) étant enroulées autour des troisièmes corps magnétiques (31), et des troisièmes aimants permanents (32A, 32B), dans lequel les troisièmes aimants permanents (31) sont agencés autour de l'axe de rotation (R) à intervalles réguliers dans la direction circonférentielle, et les pôles magnétiques de ces troisièmes aimants permanents étant tels que les troisièmes aimants permanents (32A, 32B) adjacents ont des pôles magnétiques orientés dans des directions opposées, l'un vers l'intérieur et l'autre vers l'extérieur ; et

une relation Ns = N1±Nh est satisfaite lorsque N1 est le nombre de pôles magnétiques du premier rotor (10), Nh est le nombre de paires de pôles du second rotor (20), et Ns est le nombre de fentes du stator (30).

6. Dispositif d'engrenage à ondes magnétiques (1F) dans lequel un stator (30), un premier rotor (10) et un second rotor (20) sont placés selon une forme concentrique, dont un centre est un axe de rotation (R), dans lequel :

le premier rotor (10) possède des premiers corps magnétiques (11) et des premiers aimants permanents (12), dans lequel les premiers corps magnétiques (11) sont agencés autour de l'axe de rotation (R) à intervalles réguliers, et les premiers aimants permanents (12) sont chacun agencés entre les premiers corps magnétiques (11) voisins dans une direction circonférentielle, et les premiers aimants permanents sont tous magnétisés vers l'extérieur, et leurs pôles magnétiques sont identiques ;

le second rotor (20) est disposé radialement entre le stator et le premier rotor, et possède des seconds aimants permanents (22A, 22B) qui sont agencés autour de l'axe de rotation (R) à intervalles réguliers dans la direction circonférentielle, les pôles magnétiques de ces seconds aimants permanents étant tels que les seconds aimants permanents (22A, 22B) adjacents ont des pôles magnétiques orientés dans des directions opposées, l'un vers l'intérieur et l'autre vers l'extérieur ;

le stator (30) possède des troisièmes corps magnétiques (31) qui font saillie vers l'intérieur dans une direction radiale et qui sont dotés de fentes (34) dans lesquelles des bobines (33) peuvent être enroulées, les bobines (33) étant enroulées autour des troisièmes corps magnétiques (31), et des troisièmes aimants permanents (32A, 32B), dans lequel les troisièmes aimants permanents (31) sont agencés autour de l'axe de rotation (R) à intervalles réguliers dans la direction circonférentielle, et les pôles magnétiques de ces troisièmes aimants permanents sont tels que les troisièmes aimants permanents (32A, 32B) adjacents ont des pôles magnétiques orientés dans des directions opposées, l'un vers l'intérieur et l'autre vers l'extérieur ; et

une relation Ns = N1±Nh est satisfaite lorsque N1 est le nombre de pôles magnétiques du premier rotor, Nh est le nombre de paires de pôles du second rotor, et Ns est le nombre de fentes du stator.

7. Dispositif d'engrenage à ondes magnétiques (1A, 1B, 1C, 1D, 1E, 1F) selon l'une quelconque des revendications précédentes, dans lequel le premier rotor (10) est un rotor basse vitesse et le second rotor (20) est un rotor haute vitesse.

8. Dispositif d'engrenage à ondes magnétiques (1A, 1B, 1C, 1D, 1E, 1F) selon l'une quelconque des revendications précédentes, dans lequel chaque aimant permanent est formé à partir d'un aimant néodyme.

FIG. 1

FIG. 2

FIG. 3

FIG. 4

FIG. 5

FIG. 6

FIG. 7A

FIG. 7B

## FIG. 8A

## FIG. 8B

FIG. 9A

FIG. 9B

# FIG. 10

## FIG. 11

## FIG. 12

**EP 3 147 542 B1**

**REFERENCES CITED IN THE DESCRIPTION**

**Patent documents cited in the description**

- JP 2014104587 A
- GB 2437568 A
- EP 2390993 A1
- JP 2010106940 A
- JP 2010223340 A